Europäisches Patentamt

European Patent Office

Office européen des brevets

(11) Veröffentlichungsnummer: **0 399 990**
**A2**

## (12) EUROPÄISCHE PATENTANMELDUNG

(21) Anmeldenummer: 90890120.0

(22) Anmeldetag: 18.04.90

(51) Int. Cl.5: **C05F 15/00, C05F 5/00**

(30) Priorität: 18.04.89 AT 927/89

(43) Veröffentlichungstag der Anmeldung:
28.11.90 Patentblatt 90/48

(84) Benannte Vertragsstaaten:
CH DE DK FR GB IT LI NL

(71) Anmelder: Graefe, Gernot, Dr. rer. nat
Bergstrasse 6
A-7082 Donnerskirchen(AT)

(72) Erfinder: Graefe, Gernot, Dr. rer. nat
Bergstrasse 6
A-7082 Donnerskirchen(AT)

(74) Vertreter: Itze, Peter, Dipl.-Ing. et al
Patentanwälte Casati, Wilhelm, Dipl.-Ing. Itze,
Peter, Dipl.-Ing. Amerlingstrasse 8 Postfach
234
A-1060 Wien(AT)

(54) **Bodenverbesserungsmittel.**

(57) Die Erfindung bezieht sich auf ein Bodenverbesserungsmittel bzw. Dünger, wobei die Biertrebern
mit Phenolen und/oder phenolischen und/oder phenolhältigen, organischen Substanzen und anorganischen Puffersubstanzen vermischt und biologisch
umgesetzt sind.

EP 0 399 990 A2

# Bodenverbesserungsmittel

Die Erfindung bezieht sich auf ein Bodenverbesserungsmittel bzw. Dünger.

Zur Verbesserung der Bodenstruktur ist es bekannt, Bodenverbesserungsmittel einzusetzen, die aus organischem Material bestehen, bei welchem durch mikrobiologischen Abbau huminsäureartige Verbindungen angereichert sind. Als Ausgangsprodukt hat sich dabei bisher Traubentrester angeboten, der von der Energiebilanz insoferne bemerkenswert ist, als er einen entsprechend hohen Stickstoffgehalt aufweist.

Anderseits fallen in immer größerem Maßstab bei den Brauereien Biertrebern an, welche nur zum Teil in der Landwirtschaft als Futtermittel einsetzbar sind, da sie relativ rasch verfüttert werden müssen, zumal aufgrund des hohen Eiweißgehaltes die Haltbarkeit der Biertrebern nur sehr gering ist.

Der Erfindung liegt die Aufgabe zugrunde, Biertrebern einer entsprechenden Verwertung zuzuführen, wobei gleichzeitig ein entsprechendes Bodenverbesserungsmittel erzielt werden soll.

Erfindungsgemäß wird diese Aufgabe dadurch gelöst, daß die Biertrebern mit Phenolen und/oder phenolischen und/oder phenolhältigen, organischen Substanzen und anorganischen Puffersubstanzen vermischt und biologisch umgesetzt sind. Dadurch wird erreicht, daß die Stickstoffverbindungen mit Hilfe der phenolischen Anteile zu stabilen Huminsäuremolekülen kondensiert werden, welche dann im Boden in einer für Pflanzen aufnehmbaren Form vorliegen. Aufgrund der gleichfalls zugesetzten anorganischen Puffersubstanzen liegt das Bodenverbesserungsmittel in einer Form vor, durch welche der pH-Haushalt des Bodens nicht gestört wird. Dies ist deshalb wichtig, da eine Vielzahl von Pflanzen hinsichtlich des pH-Wertes des Bodens sehr empfindlich sind, wobei auch weniger empfindliche Pflanzen sich nur allmählich an geänderte pH-Bedingungen anpassen. Es werden nämlich vielfach aufgrund extremer pH-Bedingungen die feinen Haarwurzeln der Pflanzen geschädigt, sodaß es den Pflanzen dann nicht mehr möglich ist, die benötigten Nährstoffe in einem entsprechenden Maß rasch genug aufzunehmen.

Vorteilhafterweise können die phenolhaltigen organischen Substanzen geschrotete Rinde, insbesondere Kifernrinde, sein, wodurch erreicht wird, daß einerseits sowohl die Biertrebern aufgrund des hohen Stickstoffgehaltes und anderseits die Ligninsubstanzen der Rinde selbst zu den Huminsäuren kondensiert werden. Auf diese Art wird eine Verwertung der im hohen Maße bei Sägewerken abfallenden Rindenabfälle erzielt. Dabei können auch Rindenabfälle Verwendung finden, die vorher für einen Tanninauszug gedient haben.

Bei einem anderen vorteilhaften Bodenverbesserungsmittel können die phenolhältigen organischen Substanzen Kaffeesatz sein. Kaffeesatz ist als solcher bereits als Bodenverbesserungsmittel bekannt, jedoch wird seine Wirksamkeit im Rahmen der vorliegenden Erfindung dadurch verbessert, daß die phenolhaltigen Bestandteile des Kaffeesatzes mit den Stickstoffbestandteilen der Biertrebern direkt zu den Huminsäuren umgesetzt werden, sodaß hier sowohl ein die Bodenstruktur als solches verbesserndes Mittel als auch ein das Wachstum förderndes Mittel, also ein Dünger, vorliegt.

Im Rahmen der vorliegenden Erfindung kann auch ein weiteres Abfallstoff äußerst nutzbringend eingesetzt werden, denn es können die phenolhältigen organischen Substanzen auch die Mesokarpschicht der Kaffeefrüchte sein. Diese Mesokarpschicht beträgt etwa 20 % der Gesamtfrucht des Kaffees, und ist jene Schicht der Gesamtfrucht, in die Kaffeebohnen eingebettet sind.

Schließlich können die phenolhältigen organischen Substanzen auch zerkleinerte, insbes. gequetschte Maiskolben, sein, womit auch dieses organische Material, welches nach der Ernte der Maiskörner anfällt und vielfach verbrannt wird, einer biologischen Verwertung zugeführt wird.

Bei dem erfindungsgemäßen Bodenverbesserungsmittel können die anorganischen Puffersubstanzen eine Mischung aus silikatischen und karbonatischen Gesteinsmehlen sein, wodurch die Bodenstruktur, insbes. bei schweren Böden, zusätzlich verbessert wird. Gesteinsmehle wirken nämlich bei lehmhältigen oder tonartigen Böden stark lockernd, wobei sie zudem noch eine entsprechend gute Pufferwirkung aufweisen.

Bei einem erfindungsgemäßen Verfahren zur Herstellung des erfindungsgemäßen Bodenverbesserungsmittels bzw. Düngers werden etwa 70 Vol.-Teile frische Biertrebern mit etwa 29 Vol-Teilen phenolhältiger organischer Substanz und etwa 0.6 Vol.-Teilen anorganischen Puffer substanzen vermischt und mit Huminsäuren bildenden Mikroorganismen biologisch umgesetzt. Dadurch wird eine ausgewogene Bildung von huminsäureartigen Verbindungen erreicht, da die aus den Biertrebern stammenden Eiweißbestandteile mit den Phenolen zu den entsprechenden huminsäureartigen Verbindungen kondensiert werden, wobei die beim Ligninabbau auftretende Protocatechusäure als zusätzlicher Lieferant phenolhaltiger Baustoffe für die Humifizierung sorgt.

Vorteilhafterweise erfolgt die biologische Umsetzung in zwei Stufen, wobei in der ersten Stufe eine Zersetzung der organischen Substanzen durch thermophile Pilze und in der zweiten Stufe eine Ausreifung und Humifizierung zusätzlich durch Streptomyceten erfolgt. Die Streptomyceten der zweiten Stufe haben dabei den Vorteil, daß bei Einbringung des so hergestellten Bodenverbesserungsmittels die Streptomyceten als Impfmaterial in den landwirtschaftlichen Böden wirkt, da diese Mikroorganismengruppe bevorzugt in der Lage ist, aus Nitraten pflanzenverfügbares Ammonium zu machen.

Zur Beimpfung mit Mikroorganismen kann humifizierter, sporenreicher Traubentrester zugeführt werden, wodurch die Mikroorganismen direkt die Verrottungstätigkeit der Substanzen vornehmen können, da sie in dem verrotteten Traubentrester ohne negative Einflüsse gehalten sind, und damit ihre volle Wirkkraft erhalten.

Die Erfindung wird nachstehend anhand eines Ausführungsbeispieles näher erläutert.


Beispiel:

70 Vol-% frische Biertrebern werden mit 29 % geschroteter Kiefernrinde und 0,6 % einer Mischung von 8 verschiedenen Gesteinsmehlen vermischt. Die Gesteinsmehle sind an sich zusammensetzungsmäßig nicht unbedingt wesentlich, sondern es wurden solche Gesteinsmehle gewählt, die sowohl silikatischen als auch karbonatischen Ursprung haben, und die eine gute Puffersubstanz mit großen Oberflächen aufweisen. Zu dieser gesamten Mischung wird dann noch 0,4 Vol.-% humifizierter sporenreicher Traubentrester zur Beimpfung zugesetzt. Diese gesamte Mischung wurde in luftigen Kästen gelagert, wobei anstelle dieser Kastenlage rung auch eine freie Mietenform gewählt hätte werden können. Das Gemenge wurde etwa 5 Wochen in einer Hauptrotte umgesetzt und dann umgeschichtet. Danach macht das Gemisch eine rund zweiwöchige Nachrotte durch, in welcher dann die entsprechenden Streptomyceten ihre Wirkung ausführen.

Bei Einsatz von Kaffeesatz anstelle von Kiefernrinden könnte der Prozentsatz geringer als 29 % angesetzt werden. Beim Einsatz von Maiskolben müsste er erhöht werden, schon allein deshalb, weil eine sorgsame Vermahlung von Maiskolben zu aufwendig wäre. Dieses Mischungsverhältnis hängt also von der Zusammensetzung der jeweiligen Substanzen bzw. der raschen Verfügbarkeit der phenolischen Komponente ab, um ein entsprechendes Mischungsverhältnis zwischen Eiweiß- bzw. Stickstoffanteil der Biertrebern einerseits und der phenolischen Komponente andersseits zu erreichen.


**Ansprüche**

1. Bodenverbesserungsmittel bzw. Dünger, dadurch gekennzeichnet, daß Biertrebern mit Phenolen und/oder phenolischen und/oder phenolhältigen, organischen Substanzen und anorganischen Puffersubstanzen vermischt und biologisch umgesetzt sind.

2. Bodenverbesserungsmittel bzw. Dünger nach Anspruch 1, dadurch gekennzeichnet, daß die phenolhältigen, organischen Substanzen geschrotete Rinde, insbesondere Kiefernrinde, sind.

3. Bodenverbesserungsmittel bzw. Dünger nach Anspruch 1, dadurch gekennzeichnet, daß die phenolhältigen, organischen Substanzen Kaffeesatz sind.

4. Bodenverbesserungsmittel bzw. Dünger nach Anspruch 1, dadurch gekennzeichnet, daß die phenolhältigen organischen Substanzen die Mesokarpschicht der Kaffeefrüchte sind.

5. Bodenverbesserungsmittel bzw. Dünger nach Anspruch 1, dadurch gekennzeichnet, daß die phenolhältigen organischen Substanzen zerkleinerte, insbesondere gequetschte, Maiskolben sind.

6. Bodenverbesserungsmittel bzw. Dünger nach einem der Ansprüche 1 bis 5, dadurch gekennzeichnet, daß die anorganischen Puffersubstanzen eine Mischung aus silikatischen und carbonatischen Gesteinsmehlen sind.

7. Verfahren zur Herstellung eines Bodenverbesserungsmittels bzw. Düngers nach einem der Ansprüche 1 bis 6, dadurch gekennzeichnet, daß etwa 70 Vol.Teile frische Biertrebern mit etwa 29 Vol. Teilen phenolhältigen organischer Substanz und etwa 0,6 Vol.Teilen anorganischen Puffersubstanzen vermischt und mit Huminsäuren bildenden Mikroorganismen biologisch umgesetzt werden.

8. Verfahren nach Anspruch 7, dadurch gekennzeichnet, daß die biologische Umsetzung in zwei Stufen erfolgt, wobei in der ersten Stufe eine Zersetzung der organischen Substanzen durch thermophile Pilze und in der zweiten Stufe eine Ausreifung und Humifizierung zusätzlich durch Streptomyceten erfolgt.

9. Verfahren nach Anspruch 7 oder 8, dadurch gekennzeichnet, daß zur Beimpfung mit Mikroorganismen humifizierter, sporenreicher Traubentrester zugefügt wird.